# EUROPÄISCHE PATENTSCHRIFT

(11) **EP 4 219 277 B1**
(45) Veröffentlichungstag und Bekanntmachung des Hinweises auf die Patenterteilung: **21.01.2026**
(21) Anmeldenummer: 22197816.6
(22) Anmeldetag: 26.09.2022
(51) Int. Cl.: B62D 33/06

(54) **KABINENLAGERUNGSSYSTEM UND KABINENLAGERUNG**
CABIN MOUNTING SYSTEM AND CABIN MOUNT
SYSTÈME DE MONTAGE DE CABINE ET MONTAGE DE CABINE

(30) Priorität: 31.01.2022 DE 102022102178
(43) Veröffentlichungstag der Anmeldung: 02.08.2023
(73) Patentinhaber: Deere & Company, Moline, IL 61265 (US)
(72) Erfinder: Hingne, Abhijit, Mannheim (DE); Flebbe, Thiemo, Mannheim (DE)
(74) Vertreter: Dehnhardt, Florian Christopher

(56) Entgegenhaltungen:
- EP-A2- 2 650 195
- DE-A1- 19 961 670

## Beschreibung

Die vorliegende Erfindung betrifft eine Kabinenlagerung für Fahrzeuge, welche die Befestigung der Kabine eines Fahrzeugs auf oder an dem Chassis ermöglichen. Die Kabinenlagerung umfasst eine Chassishalterung mit einer Chassisplatte, ausgelegt zum Befestigen an ein Fahrzeugchassis, eine an der Chassisplatte befestigte untere Lagerplatte mit einer Öffnung, ausgelegt zum Verbinden mit einer oberen Lagerplatte, eine Kabinenplatte, ausgelegt zum Befestigen an einer Fahrzeugkabine, eine an der Kabinenplatte befestigte obere Lagerplatte mit einer U-förmigen Struktur, ausgelegt um in der Öffnung der unteren Lagerplatte beweglich gehalten zu werden, so dass die Chassishalterung und die Kabinenhalterung relativ zueinander bewegbar sind.

Eine solche Kabinenlagerung für ein Nutzfahrzeug in Gestalt einer hinteren Fahrerhauslagerung ist beispielsweise aus der EP 2 650 195 A2 bekannt. Die Fahrerhauslagerung umfasst eine Quertraverse, die beidseitig an zwei Anlenkungspunkten mit einer Lageranordnung verbunden ist. Die Lageranordnung stellt eine Verbindung zwischen der Quertraverse und jeweiligen Rahmenlängsträgern her und umfasst einerseits eine Feder-Dämpfereinheit und andererseits eine Seitenführung, die in der Lagerung auftretende Seitenkräfte aufnimmt. Die Feder-Dämpfereinheit ermöglicht eine vertikale Bewegung des Fahrerhauses bis zu einer vorgegebenen maximalen Vertikalbewegung. Durch die Seitenführung, insbesondere eine in einem Führungselement bzw. einem darin ausgebildeten Langloch beweglich gelagerte Führungsroll, die über einen Halter an der Quertraverse befestigt ist, kann die Quertraverse gemeinsam mit dem Halter und der Führungsrolle eine Vertikalbewegung relativ zum Rahmenlängsträger mit dem daran befestigten Lagerbock sowie dem Führungselement ausführen. Durch die Fixierung der Führungsrolle quer und längs zur Fahrzeuglängsachse innerhalb des Langlochs wird gleichzeitig zuverlässig sichergestellt, dass auftretende Seitenkräfte aufgenommen werden. Außerdem wird gewährleistet, dass bei einem Bruch der Feder-Dämpfereinheit das Fahrerhaus nach wie vor sicher mit dem Rahmenlängsträger verbunden ist.

Fahrzeuge für den Offroadbereich werden in anspruchsvollen Arbeitsumgebungen eingesetzt. Bei den Fahrzeugen kann es sich dabei um Baufahrzeuge, z.B. Raupenfahrzeuge, Fahrzeuge für Erdaushub, Forstfahrzeuge zum Verarbeiten von Nutzholz oder um landwirtschaftliche Fahrzeuge handeln.

Der Einsatzort ist meist unerschlossenes Gelände mit vorhandenen Steigungen. Gerade bei vorhandenem Gefälle und dem Einsatz auf Erdboden oder Geröll kann es zu einer starken Neigung des Fahrzeugs kommen, mit einem verbundenen Kippen oder Überschlagen des Fahrzeugs im Schadensfall. In dieser Situation ist die Bedienperson bestmöglich vor Verletzungen zu schützen, zum einem vor möglichen Kollisionen innerhalb der Kabine, zum anderen vor einem Herausschleudern aus der Kabine heraus. Zusätzlich ist es erforderlich, die Kabine derart am Fahrzeug zu halten, dass ein Losbrechen der Kabine bei einem Kippen des Fahrzeugs verhindert wird und eine Sicherheitszelle für die Bedienperson auch bei einem Überschlag des Fahrzeugs erhalten bleibt.

Aufgrund des Fahrzeugeinsatzes im freien Gelände und der damit verbundenen Arbeitsumgebung bleibt Schmutzeintrag am und im Fahrzeug nicht aus. Dadurch kommt es zu Verschmutzungen unterhalb der Fahrzeugkabine, so dass besonders bei beweglich gelagerten Kabinen der Federweg beeinträchtig werden kann. Zusätzlich kann der Schmutzeintrag zu Geräuschentwicklung führen, da vorhandene Spalten zwischen beweglichen Bauteilen der Kabinenlagerung mit Schmutzpartikeln verfüllt werden können.

Es ist die Aufgabe der Erfindung, die angesprochenen Probleme zu vermeiden. Die Aufgabe wird gelöst durch die Erfindung gemäß dem Hauptanspruch. Weitere Ausbildungen der Erfindung ergeben sich aus den abhängigen Ansprüchen.

Die Erfindung betrifft eine Kabinenlagerung aufweisend eine Chassishalterung, die eine Chassisplatte aufweist, ausgelegt zum Befestigen an ein Fahrzeugchassis, eine an der Chassisplatte befestigte untere Lagerplatte mit einer Öffnung, ausgelegt zum Verbinden mit einer oberen Lagerplatte, eine Kabinenhalterung aufweisend eine Kabinenplatte, ausgelegt zum Befestigen an einer Fahrzeugkabine, eine an der Kabinenplatte befestigte obere Lagerplatte mit einer U-förmigen Struktur, ausgelegt um in der Öffnung der unteren Lagerplatte beweglich gehalten zu werden, so dass die Chassishalterung und die Kabinenhalterung relativ zueinander bewegbar sind, wobei wenigstens ein flexibles Element an der Chassisplatte und an der oberen Lagerplatte befestigt ist, derart, dass durch die relative Bewegung der Chassishalterung und der Kabinenhalterung das flexible Element bewegt wird, so dass durch die Bewegung ein Oberflächenkontakt zwischen dem flexiblen Element und der Chassishalterung ermöglicht wird.

Die Kabinenlagerung wird durch die passive Auf- und Abbewegung der Kabine und je nach Ausstattung durch eine aktive Kabinendämpfung bewegt. Das flexible Element, welches mit einem Ende an der Kabinenseite befestigt ist, und mit dem weiteren Ende an der Chassisseite, wird durch die Auf- und Abbewegung mitbewegt. Durch die Bewegung und die Oberflächenberührung auf der Chassisseite bewirkt das flexible Element ein Abstreifen von Schmutz des Kabinenlagerungssystems, unter anderem auf der Chassisseite. Dies führt dazu, dass sich Schmutz nicht festsetzen kann und ein übermäßiger Aufbau einer Schmutzschicht verhindert wird, beispielsweise Erde, Steine oder auch Zweige. Besonders bei Fahrzeugen für die Land-. Forst- und Bauwirtschaft ist dies von Vorteil. Das Vermeiden oder Reduzieren eines Schmutzschichtaufbaus stellt ein störungsfreies Funktionieren der Kabinenlagerung sicher und vermeidet das Auftreten von Geräuschen während der Auf-und Abbewegung. Zusätzlich können Reinigungsintervalle verlängert werden und der Reinigungsaufwand wird verringert.

In einer Weiterbildung kann das flexible Element in Form eines Bandes vorgesehen sein, und an den Enden jeweils mit der Chassisplatte und der oberen Lagerplatte befestigt sein.

Die Bandform des flexiblen Elements stellt einen großen Oberflächenkontakt her und kann eine entsprechend breite Fläche überstreichen. Durch die Form kann das flexible Element gleichzeitig einfach ersetzt und gewartet werden. Als Material können unter anderem dünn gewalzte Bleche oder auch Kunststoffmaterial in Bandform gewählt werden.

Bei einer Ausführung kann das flexible Element in Form eines Seils oder einer Schnur vorgesehen sein, und an den Enden jeweils mit der Chassisplatte und der oberen Lagerplatte befestigt sein.

Das flexible Element ist durch die Form damit besonders flexibel. Durch die Flexibilität und Form ist das flexible Element besonders verformbar und kann je nach gewählter Länge einen großen Oberflächenbereich von Schmutz befreien.

In einer Ausbildung kann das flexible Element aus Kunststoff oder aus Metall bestehen.

Bei einer Anfertigung aus Kunststoff ist eine höhere Flexibilität oder Verformbarkeit des flexiblen Elements gewährleistet. Das flexible Element kann hierbei an die Chassishalterung mittels Kleben, Verschrauben, Verkeilen, Verklemmen oder Kunststoffschweißen befestigt sein. Bei einer Anfertigung aus Metall kann das flexible Element eine erhöhte Haltbarkeit oder Lebensdauer aufweisen. Das flexible Element kann in diesem Fall durch Schweißen an der Chassishalterung angebracht werden.

Bei einer Weiterbildung kann das flexible Element auf einer Seite der oberen Lagerplatte vorgesehen sein.

Die obere Lagerplatte ist in der Einbausituation vertikal orientiert, so dass diese zwei Seiten aufweist, wobei die U-Förmige Struktur auf einer unteren Seite mittels eines Bolzens, einer Schraube oder einem geschweißten Steg geschlossen ist. An einer Seite der U-förmigen Struktur ist dabei das flexible Element angebracht. Hierbei kann das flexible Element besonders vorteilhaft dort angebracht werden, wo die Schmutzansammlung am stärksten auftritt bzw. an dem Ort, an dem die Verschmutzung die größte Auswirkung auf die Funktionsweise der Kabinenlagerung hat.

In einer Ausführung kann das elastische Element auf beiden Seiten der oberen Lagerplatte vorgesehen sein.

Eine beidseitige Anordnung stellt sicher, dass weder auf der Chassisplatte noch auf oder an dem Gestänge zwischen oberer und unterer Lagerplatte Verschmutzungen aufgebaut werden können und zu einer Geräuschentwicklung oder Funktionsbeeinträchtigung führen.

In einer Ausbildung kann zwischen der Kabinenplatte und der Chassisplatte ein hydraulischer Aktuator vorgesehen sein.

Der Aktuator stellt sicher, dass die Lagerung der Kabine aktiv angesteuert werden kann. So können von einer Fahrzeugsensorik erfasste Bewegungen dazu verwendet werden, die Auswirkungen auf die Kabine zu verringern. Weiterhin stellt der Aktuator sicher, dass eine Dämpfung erfolgen kann.

Bei einer Weiterbildung kann an der unteren Lagerplatte ein Positionssensor vorgesehen sein, der mit einem Gestänge zur Führung der oberen und unteren Lagerplatte zusammenwirkt.

Durch den Positionssensor, der mit dem Gestänge zusammenwirkt, das eine Lagerung zwischen der unteren und der oberen Lagerplatte darstellt, kann der vertikale Abstand zwischen der oberen und der unteren Lagerplatte erfasst werden. Der Positionssensor kann dabei ein Winkelsensor oder ein Abstandssensor sein, solange ein Abstand aus den Messdaten errechnet werden kann. Mit Hilfe des errechneten Abstands kann eine aktive Kabinenfederung realisiert werden. Diese steuert aktiv vorhandene Hydraulikaktuatoren an, so dass eine Regelung erfolgt. Weiterhin kann ein sicherheitsrelevanter Zustand erfasst werden, so dass auch in diesem Fall die Hydraulikaktuatoren aktiv in eine gesonderte Position gefahren werden können, die eine größtmögliche Sicherheit für die Bedienperson gewährleistet.

Die Erfindung umfasst weiterhin ein Kabinenlagerungssystem aufweisend wenigstens zwei erfindungsgemäße Kabinenlagerungen, wobei zwischen der Kabinenplatte einer Kabinenlagerung und der unteren Lagerplatte der weiteren Kabinenlagerung ein Panhardstab beweglich gehalten ist.

Die Erfindung und Weiterbildungen werden anhand der Figuren erläutert. Dabei zeigt
Figur 1 eine Detailansicht einer Ausführung;
Figur 2 eine Ausführung in einem eingebauten Zustand in einem Fahrzeug;
Figur 3 eine weitere Ausführung in eingebautem Zustand;
Figur 4 eine Ausführung an einem Achsenmodul eines Fahrzeugs.

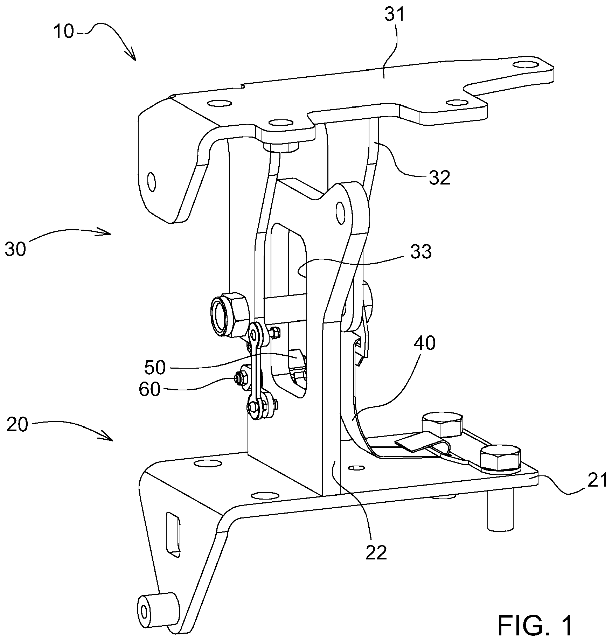

In Fig. 1 ist die Kabinenlagerung 10 in einer isometrischen Ansicht dargestellt. Die Kabinenlagerung 10 weist dabei eine zweiteilige Form auf. Der untere Teil stellt dabei die Chassishalterung 20 dar, der obere Teil die Kabinenhalterung 30. Die Chassishalterung 20 beinhaltet eine Chassisplatte 21, die dazu vorgesehen ist, auf einem Teil des Fahrzeugs, bevorzugt ein Bestandteil des Chassis befestigt zu werden mittels Verschraubung oder Verschweißung. Eine untere Lagerplatte 22 ist fest mit der Chassisplatte 21 verbunden, derart, dass diese sich senkrecht zur Chassisplatte 21 erstreckt und in einem mittleren Bereich der Chassisplatte 21 angebracht ist. Die Verbindung kann durch Schweißen, Schrauben, Nieten sichergestellt sein. Die untere Lagerplatte 22 weist in ihrer Mitte, eine Öffnung 33 auf, die dazu dient, einen Teil der oberen Lagerplatte 32 aufzunehmen. Die Öffnung 33 kann dabei gefräst, gebohrt oder gestanzt sein.

Die Kabinenhalterung 30 weist eine Kabinenplatte 31 auf, die dazu ausgebildet ist, an einem Bestandteil der Kabine angebracht zu werden. Hierzu kann die Kabinenplatte 31 Bohrungen für Schrauben aufweisen, jedoch kann diese auch alternativ verschweißt werden. An der Kabinenplatte 31 ist eine obere Lagerplatte 32 in einem mittleren Bereich der Kabinenplatte 31 senkrecht fest verbunden. Die obere Lageplatte 32 weist hierzu zwei zueinander parallele Stege als freien Enden auf, die in einem festen Abstand an der Kabinenplatte 31 befestigt sind. In einem Endbereich der oberen Lagerplatte 32 sind die freien Enden durch einen Bolzen, eine Schraube oder einen Metallstab miteinander verbunden. Dabei sitzt der Bolzen gleichzeitig innerhalb der Öffnung 33 der unteren Lagerplatte 22 und sichert eine bewegliche Verbindung der unteren mit der oberen Lagerplatte 22, 32, somit auch der Chassishalterung 20 mit der Kabinenhalterung 30. Durch die geometrische Höhe und Breite der Öffnung 33 ist die relative Beweglichkeit der Kabinenhalterung 30 und der Chassishalterung 20 festgelegt.

An der oberen Lagerplatte 32 ist an einem Ende des Bolzens mittels einer Verschraubung das flexible Element 40 angebracht, welches gleichzeitig mit dem weiteren Ende an der Chassisplatte 21 befestigt ist. Das flexible Element 40 ist in Form eines Blechstreifens dargestellt, jedoch kann ebenso ein Kunststoffband stattdessen verwendet werden. Das flexible Element 40 ist derart in seiner Länge bemessen, dass es zu keinem Zeitpunkt gespannt ist, sondern stets einen Durchhang aufweist. Dabei ist der Durchhang so gewählt, dass zwischen dem flexiblen Element 40 und der Chassishalterung 20 ein Oberflächenkontakt hergestellt wird. Durch die relative Bewegung der Kabinen- und der Chassishalterung 20 wird das flexible Element 40 mitbewegt, so dass durch die Bewegung und den Oberflächenkontakt eine Schleif- oder Wischbewegung erzeugt wird. Die Bewegung und der Oberflächenkontakt sorgen für ein konstantes Abstreifen oder Abschleifen von anhaftendem Schmutzpartikeln, die sich auf den Oberflächen ansetzt. Zusammen mit der horizontalen Bewegung des Fahrzeugs im Betrieb wird ein Schmutzaufbau an der Kabinenlagerung 10 vermieden oder verringert.

Die Chassis- und die Kabinenhalterung 20, 30 sind zusätzlich durch das Gestänge 60 beweglich miteinander verbunden. Das Gestänge 60 dient primär der Erfassung des Abstands der Chassis- und der Kabinenhalterung 20, 30 zueinander. Hierfür ist an der unteren Lagerplatte 22 ein Positionssensor 50 in Form eines Winkelsensors 50 angebracht, der den Winkel der Auslenkung des Gestänges 60 erfasst. Durch eine elektrische Signalausgabe des Sensors 50 mit einer möglichen Berechnung mit Hilfe eines Steuergerätes kann der Abstand berechnet oder direkt gemessen werden. Der Abstand kann für die Steuerung eine aktiven Kabinendämpfung verwendet werden.

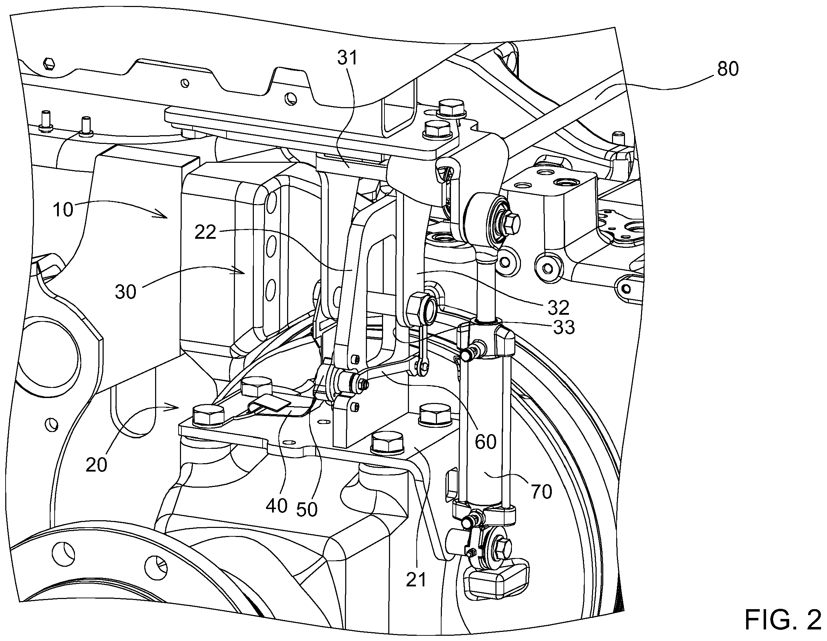

Fig. 2 zeigt die Kabinenlagerung 10 in einer Einbaulage im Fahrzeug. Mit der Chassishalterung 20 und der Chassisplatte 21 ist die Kabinenlagerung 10 an einem Chassisbereich des Fahrzeugs angebracht. Dies kann mittels Schrauben, Nieten, Verschweißen oder dergleichen erfolgen. Mit der Kabinenhalterung 30 und der Kabinenplatte 31 ist die Kabinenlagerung 10 an einer Unterseite der Kabine befestigt. Die Verbindung kann gleichfalls per Verschraubung, Nieten, Verschweißen hergestellt sein. An einer Seite der Kabinenlagerung 10 ist ein hydraulischer Aktuator 70 angebracht. Dieser dient der aktiven Verstellung der Kabinenlagerung 10, so dass der Abstand zwischen der Kabinen- und der Chassishalterung 20 eingestellt werden kann, oder eine aktive Dämpfung der Kabine ermöglicht ist.

In der Anwendung bewegt sich die Kabine unterschiedlich zum Fahrzeugchassis. Diese Bewegung resultiert in einer relativen Bewegung der oberen und unteren Lagerplatte 22, 32 zueinander. Mittels des Gestänges 60 und des Positionssensors 50 kann die Bewegung der Lagerplatten erfasst werden und daraus eine aktive Ansteuerung des hydraulischen Aktuators 70 erfolgen.

Durch die relative Bewegung der oberen und unteren Lagerplatte 32, 22 wird das flexible Element 40 mitbewegt, so dass durch die Bewegung eine Oberflächenberührung zwischen dem flexiblen Element 40 und der Chassishalterung 20 erfolgt.

Die beiden Lagerplatten sind miteinander durch einen Steg oder Bolzen verbunden, der zwischen beiden freien Enden der oberen Lagerplatte 32 angebracht ist. Es ist ebenfalls möglich, dass die untere Lagerplatte 22 stattdessen zwei Enden aufweist. Im Falle eines Fahrzeugüberschlages oder einer starken Krafteinwirkung auf die Kabine, erhalten die Lagerplatten weiterhin die Verbindung der Kabine mit dem Fahrzeug, so dass ein Überrollen oder Loslösen ausgeschlossen wird.

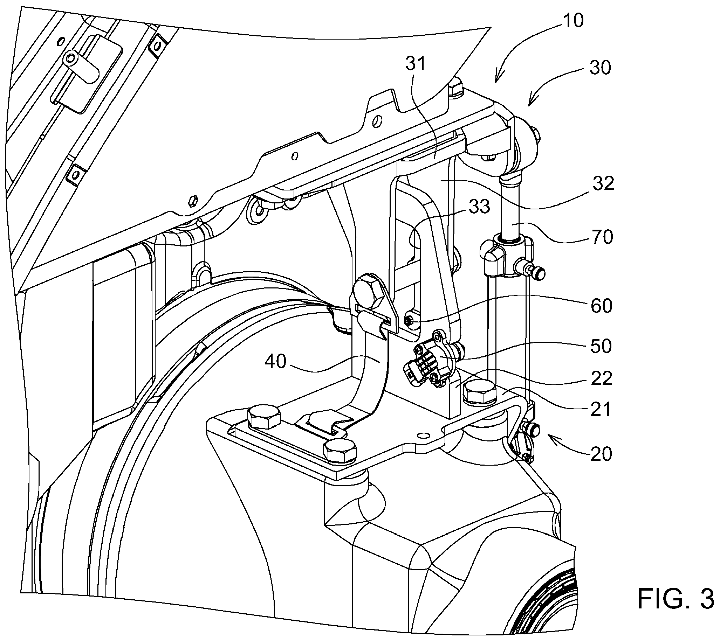

Fig. 3 zeigt eine weitere Ansicht der Kabinenlagerung 10. Das flexible Element 40 wird mittels einer Schraube an der oberen Lagerplatte 32 gehalten. Die Verbindung kann jedoch auch mit einer Vernietung, Verklebung oder Verschweißung erfolgen. Das flexible Element 40 kann eine Befestigungslasche aufweisen, durch die ein Band gezogen ist. Dabei kann das Band aus Metall oder aus Kunststoff bestehen, als Blechstreifen vorliegen oder Metall oder Kunststoff gewebt sein. Die Länge des flexiblen Elements 40 ist derart abgestimmt, dass auch bei größter Auslenkung der Kabine keine Spannung des flexiblen Elements 40 erfolgt, sondern stets eine Oberflächenberührung erfolgen kann.

Der Positionssensor 50 ist mit einer Steuerung verbunden, die hier nicht gezeigt ist. Mittels der Steuerung kann das Bewegungsverhalten der Kabine erfasst und berechnet werden, so dass eine aktive Ansteuerung des Hydraulikaktuators 70 erfolgen kann. Der Sensor 50 kann an der unteren Lagerplatte 22 angebracht sein, jedoch ebenso, falls die Einbausituation es erlaubt an der oberen Lagerplatte 32. Der Sensor 50 kann auch ein linearer Positionssensor sein. Alternativ kann der Hydraulikaktuator 70 über eine Positionsmessung verfügen.

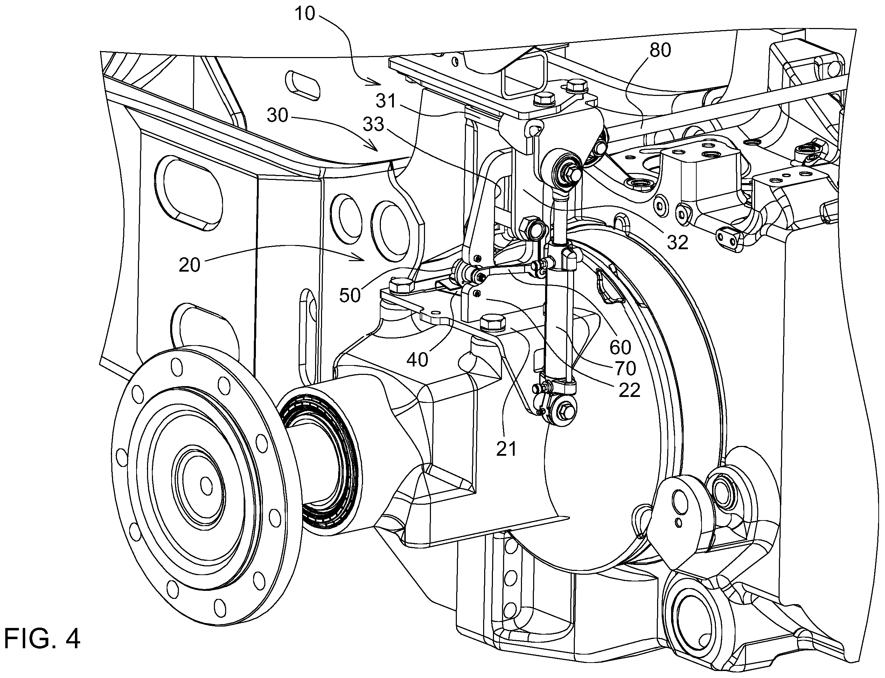

Figur 4 zeigt das Kabinenlagerungssystem, welches aus wenigstens zwei Kabinenlagerungen 10 besteht, die an einem Abschnitt des Achsgehäuses eines Fahrzeugs befestigt ist. Zusätzlich zu den voran beschriebenen Ausführungen weist die Kabinenlagerung 10 einen Panhardstab 80 auf, der eine Baugruppe der Kabinenlagerung 10 mit einer weiteren auf der anderen Kabinenseite verbindet. Der Panhardstab 80 sorgt für die Begrenzung der Freiheitsgrade und verhindert ein seitliches Ausweichen der Kabinenkonstruktion, die an der Kabinenplatte 31 befestigt ist. Hierdurch kann die erfindungsgemäße Kabinenlagerung 10 als Kabinenlagerungssystem in ein Fahrzeug integriert werden. Das System ist an beliebige Kabinenabmessungen anpassbar und ermöglicht eine Verwendung in einem breiten Fahrzeugbereich für unterschiedliche Arbeitsaufgaben.

Das Kabinenlagerungssystem wenigstens einen Positionssensor 50 auf einer Seite der Kabinenlagerung 10 aufweisen. Der Sensor 50 kann auch auf beiden Seiten der Kabinenlagerung 10 vorgesehen sein, so dass eine unterschiedliche Höhe auf beiden Seite feststellbar ist.

Besonders im Bereich der Achsen von Fahrzeugen findet ein starker Schmutzeintrag und Aufbau statt. Aufgrund der Kabinenlagerung 10 wird im kritischen Bereich der zueinander beweglichen Bauteile der Schmutzaufbau verhindert. Üblicherweise kann der Schmutzeintrag zu einem Verklemmen der beweglichen Teile, insbesondere der Kabinenlagerung 10 führen, wodurch diese nicht mehr oder nur noch eingeschränkt die Funktion verrichten kann. Darüber hinaus entstehen bei der Bewegung als störend empfundene Geräusche. Durch die erfindungsgemäße Kabinenlagerung 10 und das - system wird die einwandfreie Funktion sichergestellt.

## Patentansprüche

1. Kabinenlagerung aufweisend
eine Chassishalterung (20), aufweisend
eine Chassisplatte (21), ausgelegt zum Befestigen an ein Fahrzeugchassis,
eine an der Chassisplatte (21) befestigte untere Lagerplatte (22) mit einer Öffnung (33), ausgelegt zum Verbinden mit einer oberen Lagerplatte (32),
eine Kabinenhalterung (30) aufweisend
eine Kabinenplatte (31), ausgelegt zum Befestigen an einer Fahrzeugkabine,
eine an der Kabinenplatte (31) befestigte obere Lagerplatte (32) mit einer U-förmigen Struktur, ausgelegt um in der Öffnung (33) der unteren Lagerplatte (22) beweglich gehalten zu werden,
so dass die Chassishalterung (20) und die Kabinenhalterung (30) relativ zueinander bewegbar sind,
**dadurch gekennzeichnet, dass** wenigstens ein flexibles Element (40) an der Chassisplatte (21) und an der oberen Lagerplatte (32) befestigt ist, derart, dass durch die relative Bewegung der Chassishalterung (20) und der Kabinenhalterung (30) das flexible Element (40) bewegt wird, so dass durch die Bewegung ein Oberflächenkontakt zwischen dem flexiblen Element (40) und der Chassishalterung (20) ermöglicht wird.

2. Kabinenlagerung nach Anspruch 1, **dadurch gekennzeichnet, dass** das flexible Element (40) in Form eines Bandes vorgesehen ist, und an den Enden jeweils mit der Chassisplatte (21) und der oberen Lagerplatte (32) befestigt ist.

3. Kabinenlagerung nach Anspruch 1, **dadurch gekennzeichnet, dass** das flexible Element (40) in Form eines Seils oder einer Schnur vorgesehen ist, und an den Enden jeweils mit der Chassisplatte (21) und der oberen Lagerplatte (32) befestigt ist.

4. Kabinenlagerung nach einem der vorangehenden Ansprüche, **dadurch gekennzeichnet, dass** das flexible Element (40) aus Kunststoff oder aus Metall besteht.

5. Kabinenlagerung nach einem der vorangehenden Ansprüche, **dadurch gekennzeichnet, dass** das flexible Element (40) auf einer Seite der oberen Lagerplatte (32) vorgesehen ist.

6. Kabinenlagerung nach einem der vorangehenden Ansprüche, **dadurch gekennzeichnet, dass** das flexible Element (40) auf beiden Seiten der oberen Lagerplatte (32) vorgesehen ist.

7. Kabinenlagerung nach einem der vorangehenden Ansprüche, **dadurch gekennzeichnet, dass** zwischen Kabinenplatte (31) und der Chassisplatte (21) ein hydraulischer Aktuator (70) vorgesehen ist.

8. Kabinenlagerung nach einem der vorangehenden Ansprüche, **dadurch gekennzeichnet, dass** an der unteren Lagerplatte (22) ein Positionssensor (50) vorgesehen ist, der mit einem Gestänge (60) zur Führung der oberen (32) und unteren Lagerplatte (22) zusammenwirkt.

9. Kabinenlagerungssystem aufweisend wenigstens zwei Kabinenlagerungen (10) nach Anspruch 1 bis 7, wobei zwischen der Kabinenplatte (31) einer Kabinenlagerung (10) und der unteren Lagerplatte (22) der weiteren Kabinenlagerung (10) ein Panhardstab (80) beweglich gehalten ist.

## Claims

1. Cab mounting having
a chassis holder (20) having
a chassis plate (21), designed to be fastened to a chassis of a vehicle, a lower bearing plate (22), which is fastened to the chassis plate (21) and has an opening (33), designed for connection to an upper bearing plate (32),
a cab holder (30) having
a cab plate (31), designed for fastening to a vehicle cab,
an upper bearing plate (32) which is fastened to the cab plate (31) and has a U-shaped structure, designed in order to be held movably in the opening (33) of the lower bearing plate (22),
such that the chassis holder (20) and the cab holder (30) are movable relative to each other,
**characterized in that** at least one flexible element (40) is fastened to the chassis plate (21) and to the upper bearing plate (32) in such a manner that, by means of the relative movement of the chassis holder (20) and of the cab holder (30), the flexible element (40) is moved such that surface contact between the flexible element (40) and the chassis holder (20) is made possible by means of the movement.

2. Cab mounting according to Claim 1, **characterized in that** the flexible element (40) is provided in the form of a strip, and is fastened at the respective ends to the chassis plate (21) and to the upper bearing plate (32).

3. Cab mounting according to Claim 1, **characterized in that** the flexible element (40) is provided in the form of a cable or a cord, and is fastened at the respective ends to the chassis plate (21) and to the upper bearing plate (32).

4. Cab mounting according to one of the preceding claims, **characterized in that** the flexible element (40) is composed of plastic or of metal.

5. Cab mounting according to one of the preceding claims, **characterized in that** the flexible element (40) is provided on one side of the upper bearing plate (32).

6. Cab mounting according to one of the preceding claims, **characterized in that** the flexible element (40) is provided on both sides of the upper bearing plate (32).

7. Cab mounting according to one of the preceding claims, **characterized in that** a hydraulic actuator (70) is provided between cab plate (31) and the chassis plate (21).

8. Cab mounting according to one of the preceding claims, **characterized in that** a position sensor (50) is provided on the lower bearing plate (22), the position sensor interacting with a linkage (60) for guiding the upper bearing plate (32) and lower bearing plate (22).

9. Cab mounting system having at least two cab mountings (10) according to Claims 1 to 7, wherein a Panhard rod (80) is held movably between the cab plate (31) of a cab mounting (10) and the lower bearing plate (22) of the further cab mounting (10).

## Revendications

1. Support de cabine présentant
un support de châssis (20) présentant
une plaque de châssis (21), conçue pour être fixée sur un châssis de véhicule, une plaque support inférieure (22) fixée sur la plaque de châssis (21) présentant une ouverture (33), conçue pour être reliée à une plaque support supérieure (32),
un support de cabine (30) présentant
une plaque de cabine (31) conçue pour être fixée à une cabine de véhicule,
une plaque support supérieure (32) fixée à la plaque de cabine (31), présentant une structure en U conçue pour être maintenue mobile dans l'ouverture (33) de la plaque support inférieure (22),
de telle sorte que le support de châssis (20) et le support de cabine (30) sont mobiles l'un par rapport à l'autre,
**caractérisé en ce qu'**au moins un élément flexible (40) est fixé à la plaque de châssis (21) et à la plaque support supérieure (32), de telle manière que le déplacement relatif du support de châssis (20) et du support de cabine (30) déplace l'élément flexible (40) de telle sorte que le déplacement permet un contact de surface entre l'élément flexible (40) et le support de châssis (20).

2. Support de cabine selon la revendication 1, **caractérisé en ce que** l'élément flexible (40) est réalisé sous la forme d'une bande et est fixé aux extrémités respectivement à la plaque de châssis (21) et à la plaque support supérieure (32).

3. Support de cabine selon la revendication 1, **caractérisé en ce que** l'élément flexible (40) est réalisé sous la forme d'une corde ou d'un cordon et est fixé aux extrémités respectivement à la plaque de châssis (21) et à la plaque support supérieure (32).

4. Support de cabine selon l'une des revendications précédentes, **caractérisé en ce que** l'élément flexible (40) est en matériau synthétique ou en métal.

5. Support de cabine selon l'une des revendications précédentes, **caractérisé en ce que** l'élément flexible (40) est prévu sur un côté de la plaque support supérieure (32).

6. Support de cabine selon l'une des revendications précédentes, **caractérisé en ce que** l'élément flexible (40) est prévu des deux côtés de la plaque support supérieure (32).

7. Support de cabine selon l'une des revendications précédentes, **caractérisé en ce qu'**un actionneur hydraulique (70) est prévu entre la plaque de cabine (31) et la plaque de châssis (21).

8. Support de cabine selon l'une des revendications précédentes, **caractérisé en ce qu'**un capteur de position (50) est prévu sur la plaque support inférieure (22), lequel capteur coopère avec une tringlerie (60) pour le guidage de la plaque support supérieure (32) et de la plaque support inférieure (22).

9. Système support de cabine comprenant au moins deux supports de cabine (10) selon la revendication 1 à 7, une tige Panhard (10) étant maintenue mobile entre la plaque de cabine (10) d'un support de cabine (80) et la plaque support inférieure (22) de l'autre support de cabine (31).
